# EUROPÄISCHE PATENTSCHRIFT

(11) **EP 2 284 057 B1**
(45) Veröffentlichungstag und Bekanntmachung des Hinweises auf die Patenterteilung: **15.04.2020**
(21) Anmeldenummer: 10006763.6
(22) Anmeldetag: 30.06.2010
(51) Int. Cl.: B60W 50/08, B60W 30/12

(54) **Verfahren und Vorrichtung zur Adaption von Parametern eines Fahrerassistenzsystems**
Method and device for adapting parameters of a driver assistance system
Procédé et dispositif d'adaptation de paramètres d'un système d'assistance au conducteur

(30) Priorität: 13.08.2009 DE 102009037054; 14.09.2009 DE 102009041187
(43) Veröffentlichungstag der Anmeldung: 16.02.2011
(73) Patentinhaber: Volkswagen Aktiengesellschaft, 38440 Wolfsburg (DE)
(72) Erfinder: Kruscha, Tatjana, 38106 Braunschweig (DE); Seifert, Katharina, Dr., 10407 Berlin (DE); Graf, Thorsten, Dr., 38518 Gifhorn (DE); Olders, Stefan, 38518 Gifhorn (DE)
(74) Vertreter: Meyer, Enno

(56) Entgegenhaltungen:
- EP-A2- 1 182 089
- DE-A1- 10 135 742
- DE-A1- 10 350 276
- DE-A1- 19 734 307
- DE-A1-102004 027 085
- DE-A1-102005 018 697
- DE-A1-102008 007 555
- JP-A- 2009 020 569

## Beschreibung

Die Erfindung betrifft eine Vorrichtung zur Adaption von Parametern eines Fahrerassistenzsystems gemäß dem Oberbegriff des Anspruchs 1, eine entsprechende Vorrichtung gemäß dem Oberbegriff des Anspruchs 6 sowie ein Spurhalteassistenzsystem gemäß dem Oberbegriff des Anspruchs 9.

Zur Erhöhung der aktiven Verkehrssicherheit werden in verstärktem Masse Fahrerassistenzsysteme in modernen Kraftfahrzeugen eingesetzt. So regelt eine Geschwindigkeitsregelanlage, die auch als Cruise Control (CC) bezeichnet wird, das Fahrzeug auf eine vom Fahrer eingestellte Wunschgeschwindigkeit. Eine Erweiterung stellt ein adaptiver Abstandsregeltempomat dar, der auch als Adaptive Cruise Control (ACC) bekannt ist, und welcher eine vom Fahrer gewählte Wunschgeschwindigkeit adaptiv auf einen Abstand zu einem vorausfahrenden Fahrzeug einregelt. Weitere Beispiele für Fahrerassistenzsysteme sind das ACC-Stop&Go-System, welches zusätzlich zum ACC die automatische Weiterfahrt des Fahrzeugs im Stau oder bei stehenden Fahrzeugen bewirkt, Spurhalte- oder Lane-Assist-Systeme, die das Fahrzeug automatisch auf der Fahrzeugsspur halten, und Pre-Crash-Systeme, die im Fall der Möglichkeit einer Kollision beispielsweise eine Bremsung vorbereiten oder einleiten, um die kinetische Energie aus dem Fahrzeug zu nehmen, sowie gegebenenfalls weitere Maßnahmen einleiten, falls eine Kollision unvermeidlich ist.

Allen diesen Systemen ist gemeinsam, dass Ihnen physikalische Parameter zugrunde liegen, wie beispielsweise der Wunschgeschwindigkeit bei Geschwindigkeitsregelsystemen oder der zum Einsatz gelangenden Bremsverzögerung bei Pre-Crash-Systemen, etc. Weitere von Fahrerassistenzsystemen verwendete Parameter betreffen beispielsweise das Umfeld des Fahrzeugs, wie die Verkehrssituation oder der Straßenzustand, Wetterbedingungen etc., die für die Reaktion des Fahrerassistenzsystems von Bedeutung sind oder sein könnten.

Die oben genannten Fahrerassistenzsysteme setzen voraus, dass der Fahrer sich in einem aufmerksamen Zustands befindet, mit anderen Worten, er nicht übermüdet ist oder sich in einem unaufmerksamen Zustand befindet. Zur weiteren Erhöhung der Sicherheit wird daher dazu übergegangen die Fahrerassistenzsystem mit Einrichtungen auszustatten, die die Aufmerksamkeit oder die Fitness des Fahrers bestimmen. Wurde daher erkannt, dass der Fahrer sich in einem nicht optimalen Zustand befindet, so wird beispielsweise eine Warnung ausgegeben oder entsprechende Reaktionen des Fahrerassistenzsystems eingeleitet, mit denen wieder sichergestellt werden soll, dass der Fahrer seine Aufmerksamkeit dem Fahrgeschehen zuwendet.

So beschreibt die Druckschrift DE 100 39 795 C2 ein Verfahren zur Warnung eines Fahrers eines Kraftfahrzeugs, wobei von Sensoren eine kritische Situation erfasst und eine Warnung vor der kritischen Situation in Abhängigkeit von der Aufmerksamkeit des Fahrers ausgegeben wird. Zur Bestimmung der Aufmerksamkeit des Fahrers wird beispielsweise die Blickrichtung herangezogen.
Aus der Druckschrift DE 103 38 647 B4 ist ein Fahrerassistenzsystem, insbesondere ein Spurwechselassistent bekannt, das wenigstens einen Sensor zur Überwachung des seitlichen und/oder rückwärtigen Fahrzugumfeldes aufweist und im Fall eines erfassten Fahrzeugs über ein optischen Anzeigemittel ein Informationssignal oder ein Warnsignal ausgibt. Dabei weist die Vorrichtung ferner ein Mittel zum Erfassen der Kopfposition bzw. der Blickrichtung des Fahrers auf und das Anzeigemittel wird in Anhängigkeit der erfassten Kopfposition oder der Blickrichtung gesteuert.
Ferner ist der Druckschrift DE 100 24 227 A1 eine automatische Distanzregelung ADR zu entnehmen, bei der die Blickrichtung des Fahrers ermittelt wird und diese als weiterer Parameter in die ADR-Regelung eingebunden wird. Dies kann beispielsweise die Konsequenz haben, dass zusätzlich zu einem ausgelösten Warnsignal auch die Geschwindigkeit des Fahrzeugs reduziert wird, obwohl die automatische Distanzregelung eine höhere Geschwindigkeit erlauben würde.
Ebenso zeigt die Druckschrift DE 10 2004 027 085 A1 einen Spurhalteassistenten zum Halten eines Fahrzeugs auf einer vorgegebenen Fahrtspur, wobei der Assistent in Abhängigkeit eines Gefahrenpotentials die Fahrzeugsteuerung eingreifen kann. Dabei ergibt sich das Gefahrenpotential aus dem Verhalten des Fahrers und der Fahrsituation des Fahrzeugs, wobei das aktuelle Verhalten des Fahrer unter Anderem aus seiner Blickrichtung abgeleitet werden kann.

Die Druckschrift DE 197 34 307 A1 beschreibt ein Verfahren und eine Vorrichtung zur Überwachung und/oder Beeinflussung des Fahrzeugverhaltens eines fahrergesteuerten Kraftfahrzeugs, bei denen mittels einer Blickrichtungsbestimmungseinrichtung eine jeweils momentane Blickrichtung des Fahrers des Kraftfahrzeugs bestimmt wird. Die bestimmte Blickrichtung wird dann mit der momentanen Fahrtrichtung des Kraftfahrzeugs verglichen. In Abhängigkeit des Vergleichsergebnisses wird ein Warnsignal und/oder ein Stellersignal generiert. Durch das Stellersignal wird vorzugsweise eine Lenkwinkeländerung erschwert.

Die Druckschrift DE 101 35 742 A1 betrifft ein Kraftfahrzeug mit einem System für automatische Blickrichtungserkennung und einem System für automatische Hinderniserkennung und automatische Fahrzeugsteuerung und/oder einem System für Abstandsregelung. Dabei ist eine Betriebsart vorgesehen, in der das System für automatische Hinderniserkennung und automatische Fahrzeugsteuerung und/oder das System für Abstandsregelung aktiv sind, wenn das System für automatische Blickrichtungserkennung mangelnde Aufmerksamkeit des Fahrers des Kraftfahrzeuges feststellt, und inaktiv sind, wenn das System für automatische Blickrichtungserkennung Aufmerksamkeit des Fahrers feststellt.

Die Druckschrift EP 1 182 089 A2 schlägt ein Verfahren zur Warnung eines Fahrzeugführers vor, bei dem die Ausgabe von Warnungen, in Abhängigkeit von der Aufmerksamkeit des Fahrers folgt. Hierdurch wird vermieden, Warnungen vor kritischen Situationen an einen Fahrer auszugeben, die von dem Fahrer bereits erfasst wurden, sodass seine Reizschwelle gegenüber ausgegebenen Warnungen hoch bleibt und der Fahrer nicht durch überflüssige Warnungen gestört wird.

Die Druckschrift DE 103 50 276 A1 beschreibt eine Vorrichtung zur Ermüdungswarnung in Kraftfahrzeugen, mit einer Fahrersensorik zur Erfassung von Ermüdungszuständen des Fahrers und mit einem Abstandswarnsystem, das eine Umfeldsensorik aufweist und dazu ausgebildet ist, bei Unterschreitung eines Warnabstands zu einem vorausfahrenden Fahrzeug ein Warnsignal auszugeben und/oder einen Regeleingriff in das Antriebs- und/oder Bremssystem des Fahrzeugs vorzunehmen, wobei das Abstandswarnsystem eine Einstelleinrichtung aufweist, die dazu ausgebildet ist, den Warnabstand in Abhängigkeit von dem erfassten Ermüdungszustand zu verändern.

Nachteilig bei den bekannten Verfahren bzw. Fahrerassistenzsystemen ist, dass aus der Erkennung der Blickrichtung keine sichere Adaption von Parametern des Fahrerassistenzsystems ableitbar ist.

Der Erfindung liegt daher die Aufgabe zugrunde, die auf einer Erkennung der Blickrichtung basierende Adaptierung von Parametern eines Fahrerassistenzsystems zu verbessern.

Diese Aufgabe wird durch ein Verfahren mit den Merkmalen des Anspruchs 1, durch eine Vorrichtung mit den Merkmalen des Anspruchs 6, sowie durch einen Spurhalteassistenten mit den Merkmalen des Anspruchs 9 gelöst. Bevorzugte Ausführungsformen der Erfindung sind Gegenstand der Unteransprüche.

Das erfindungsgemäße Verfahren zum Adaptieren von einem oder mehreren Parametern eines den Fahrer eines Kraftfahrzeugs unterstützenden Fahrerassistenzsystems, weist die folgenden Schritte auf:
- Erfassen der aktuellen Blickrichtung des Fahrers durch eine Blickerfassungseinrichtung,
- Bestimmen der Zeitdauer, während welcher der Fahrer nicht auf die Strasse schaut, aus der aktuellen Blickrichtung,
- Adaptierung des oder der Parameter des Fahrerassistenzsystems, wenn die ermittelte Zeitdauer einen vorgegebenen kritischen Zeitwert überschreitet,
- Bestimmen einer Frequenz aus der Erfassung der aktuellen Blickrichtung, mit welcher der Fahrer seinen Blick von der Straße abwendet, und
- Durchführen einer Adaption eines oder mehrerer Parameter des Fahrerassistenzsystems, wenn die Frequenz größer als eine vorgegebene Schwelle ist.

Vorzugsweise ist der kritische Zeitwert eine Funktion weiterer externer Parameter. Mit anderen Worten, der kritische Zeitwert ist nicht starr vorgegeben, sondern ist eine variable Funktion weiterer Parameter des Systems "Kraftfahrzeug in seiner Umgebung". Dabei kommen als weitere externe Parameter ein oder mehrere aktuelle Fahrzeugparametern und/oder ein oder mehrere aktuelle Umgebungsparameter des Kraftfahrzeugs in Frage. Als Funktion dieser Fahrzeug bzw. Umgebungsparameter kann der kritische Zeitwert stetig oder unstetig verändert werden. Eine unstetige Veränderung des kritischen Zeitwertes kann beispielsweise in diskreten Schritten mittels einer Look-Up-Table durchgeführt werden.

So gehören beispielsweise die aktuelle Geschwindigkeit des Fahrzeugs, das Umfeld des Fahrzeugs, der Aufmerksamkeitsgrad des Fahrers, die Art und Beschaffenheit der Strasse, der Zustand der Strasse und aktuelle Informationen über Verkehrsbeeinträchtigungen zu den Fahrzeugparametern und Umgebungsparameter. Am Beispiel der Fahrzeuggeschwindigkeit kann der kritische Zeitwert beispielsweise über eine Look-Up-Table so gewählt werden, dass der kritische Zeitwert umgekehrt proportional zur Fahrzeuggeschwindigkeit ist. Mit anderen Worten, je größer die Fahrzeuggeschwindigkeit ist, umso kleiner wird die kritische Zeitwert gewählt. Ähnliches gilt für Umgebungsparameter. So kann der kritische Zeitwert als Funktion beispielsweise des Grades der Gefährlichkeit der Verkehrssituation so gewählt werden, dass der kritische Zeitwert umso kleiner gewählt wird, je gefährlicher die Verkehrssituation ist.
Ferner wird aus der Erfassung der aktuellen Blickrichtung eine Frequenz bestimmt, mit welcher der Fahrer seinen Blick von der Strasse abwendet und es erfolgt eine Adaption eines oder mehrerer Parameter des Fahrerassistenzsystems, wenn die Frequenz größer als eine vorgegebene Schwelle ist. Auch diese Schwelle kann in gleicher Weise wie der kritische Zeitwert eine Funktion weiterer externer Parametern sein.
Zu den adaptierbaren Parameter des Fahrerassistenzsystems gehören vorzugsweise die Fahrzeuggeschwindigkeit, die Fahrzeugbeschleunigung, die Fahrzeugverzögerung bzw. die Fahrzeugbremsung, der Zeitpunkt der Initiierung eines Bremsrucks zur Fahrerwarnung, der Sicherheitsabstand zu einem vorausfahrenden Fahrzeug und/oder Warnschwellen, mittels denen Warnungen an den Fahrer ausgelöst werden.
Die erfindungsgemäße Vorrichtung zur Durchführung des oben erläuterten Verfahrens umfasst eine Einheit zur Erfassung der Blickrichtung des Fahrers, eine Einheit zur Bestimmung der Zeitdauer, während welcher der Fahrer seinen Blick von der Strasse abwendet, eine Vergleichereinheit zum Vergleichen der ermittelten Zeitdauer mit einem vorbestimmten kritischen Zeitwert, eine Einrichtung zur Bestimmung einer Frequenz mit welcher der Fahrer seinen Blick von der Straße abwendet aus der Erfassung der aktuellen Blickrichtung, und eine Signalerzeugungseinheit zum Erzeugen eines Steuersignals, wenn die ermittelte Zeitdauer die kritische Zeit überschreitet und die Frequenz größer als eine vorgegebene Schwelle ist, wobei das Steuersignal in einem Fahrerassistenzsystem die Adaption vorbestimmter Parameter bewirkt.

Vorzugsweise weist die Vorrichtung eine Einheit zur Erfassung des allgemeinen Fahrerzustands auf. Diese allgemeine Information über den Fahrerzustand kann neben der Aussage der Blickrichtung der Blickerfassung zur Adaption von Parameters des Fahrerassistenzsystems verwendet werden.

Weiter bevorzugt weist die Vorrichtung eine Einheit zur Adaptierung des kritischen Zeitwerts an eine oder mehrere Fahrzeugparameter und/oder eine oder mehrere Parameter der Fahrzeugumgebung auf.

Das erfindungsgemäße Spurhalteassistenzsystem eines Kraftfahrzeugs, wobei das Spurhaltesystem ein Moment auf die Lenkung des Kraftfahrzeugs ausübt, um das Fahrzeugs in einer Fahrspur zu halten, weist die oben erläuterte Vorrichtung auf, wobei die Blickerfassungseinrichtung neben der Bestimmung der Zeitdauer, während der der Fahrer seinen Blick von der Strasse abwendet, die Blickrichtung des Fahrers bestimmt und aus dem Steuersignal und der Blickrichtung erkennt, dass der Fahrer bewusst die Fahrbahnmarkierung überfahren will. In diesem Fall baut das Spurhalteassistenzsystem kein korrigierendes Lenkmoment auf.

Vorzugsweise bestimmt die Blickerfassungseinrichtung des Spurhalteassistenzsystems, ob der Fahrer über den kritischen Zeitwert hinaus seinen Blick nicht auf die Fahrzeuganzeigen gerichtet hat, und das Spurhalteassistenzsystem reduziert die Geschwindigkeit des Fahrzeugs, wenn die der Fahrer seinen Blick über den kritischen Zeitwert hinaus weder auf die Strasse noch auf die Fahrzeuganzeigen gerichtet hat.

Zusammenfassend hängen erfindungsgemäß die vom Fahrzeugsystem automatisch einzustellenden physikalischen Werte des Tempomaten (Geschwindigkeitsregelanlage - CC - Cruise Control) und des adaptiven Abstandsregeltempomaten (ACC - Adaptive Cruise Control) sowie weiterer den Fahrer unterstützenden Fahrerassistenzsysteme, im nachfolgenden auch als FAS bezeichnet, von der ermittelten Blickrichtung/Blickverhalten des Fahrers ab, wobei ferner erfasste Aufmerksamkeits-Müdigkeits-Werten des Fahrers durch das Fahrzeugsystemzusätzlich berücksichtigt werden können. Somit sind den Fahrer bei der Fahrt unterstützende FAS automatisch adaptiv zum Fahrerzustand und Fahrerverhalten, welche aus der Blickrichtung/Blickverhalten des Fahrers sowie gegebenenfalls den Aufmerksamkeits-Müdigkeits-Werten des Fahrers bestimmt werden. Weiterhin können die FAS, wie CC, ACC, PreCrash, LDW/HC und RSD/AWV, die den Fahrer bei seinen primären Fahraufgaben unterstützen, adaptiv zum allgemeinem Fahrerzustand sein, wie emotionalem Befinden des Fahrers, wie Angst, Stress, Freude, Gelassenheit usw., die aus Mimik und/oder Gestik des Fahrers ermittelt werden, beispielsweise durch Kamerasysteme zur Mimik- und/oder Gestik-Erkennung des Fahrers. Es kann das gleiche Kamerasystem zur Bestimmung des Fahrerzustandes aus der Mimik des Fahrers verwendet werden, wie für die Bestimmung der Blickrichtung und des Blickverhaltens des Fahrers. Zur Erfassung der Gestik des Fahrers kann ein Kamerasystem für die Innenraumüberwachung verwendet werden.

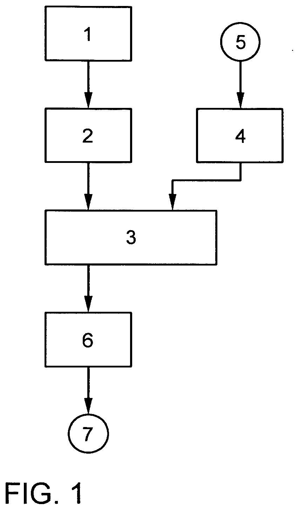

Eine bevorzugte Ausführungsform der Erfindung wird nachfolgend anhand von Beispielen und einer Zeichnung näher erläutert. Dabei zeigt
Fig. 1 eine schematische Darstellung der erfindungsgemäßen Vorrichtung.

Dabei umfasst die erfindungsgemäße Vorrichtung gemäß Fig. 1 eine Einheit 1 zur Erfassung der Blickrichtung des Fahrers. Eine derartige Blickrichtungserfassungseinrichtung 1 kann beispielsweise durch eine Innenraumkamera gebildet werden. Das Signal der Blickrichtungserfassungseinheit 1 gelangt in eine Einheit 2 zur Bestimmung einer ersten Zeitdauer, während welcher der Fahrer seinen Blick von der Strasse abwendet. Diese Einheit 2 kann auch dazu verwendet werden festzustellen, ob der Fahrer seinen Blick auf die Fahrzeuginstrumente richtet oder nicht. So kann die Einheit 2 auch eine zweite Zeitdauer bestimmen, nämlich wie lange der Fahrer die Instrumente, d.h. die Fahrzeuganzeigen, nicht beobachtet. Ferner kann die Einheit 2 zur Bestimmung der Frequenz verwendet werden, mit der der Fahrer seinen Blick von der Strasse abwendet bzw. die Frequenz bestimmt werden, mit welcher der Fahrer in eine bestimmte Richtung schaut.

Die in der Einheit 2 bestimmte erste Zeitdauer, während der der Fahrer seinen Blick von der Strasse abwendet, wird in einer Vergleichereinheit 3 mit einem kritischen Zeitwert verglichen, der von einer Einheit 4 zur Bereitstellung des kritischen Zeitwertes bereit gestellt wird. Da der kritische Zeitwert variabel ist, fließen in die Bereitstellungseinheit 4 externe Parameter 5 ein, mittels denen der kritische Zeitwert ermittelt wird.

Stellt die Vergleichseinheit 3 fest, dass die erste Zeitdauer den kritische Zeitwert überschreitet, so wird in einer Signalerzeugung 6 ein Steuersignal 7 erzeugt, das die Veränderung von mindestens einen Parameter eines nicht dargestellten Fahrerassistenzsystems initiiert, also adaptiert. Selbstverständlich kann der geschilderte Ablauf auch für die zweite Zeitdauer oder für die oben genannten Blickfrequenzen verwendet werden.

Es wird also die aktuelle Blickrichtung des Fahrers über eine Blickerfassungseinrichtung erfasst. Wenn der Fahrer längere Zeit nicht auf die Straße schaut, so dass ein kritischer Zeitwert überschritten ist, wird der vom Fahrer eingestellte Geschwindigkeitswert des Tempomaten sowie des ACC bzw. die ACC-Zeitlücke vom Fahrzeugsystem auf eine angemessene geringere Geschwindigkeit bzw. eine höhere ACC-Zeitlücke neu eingestellt. Das Fahrzeug hat einen automatisch vom Fahrzeugsystem eingestellten größeren Sicherheitsabstand durch das ACC zum vorhergehenden Fahrzeug. Weiterhin erfolgen Schwellenadaptionen weiterer physikalischer Werte von ACC und Tempomat.

Der kritische Zeitwert bei längerer Blickabwendung des Fahrers sowie die Neueinstellung der Geschwindigkeit des Tempomaten und des ACC, die Schwellenadaption weiterer physikalischer Werte von ACC und Tempomat sowie des PreCrash-Systems, wie Beschleunigung - negative Beschleunigung (Verzögerung bzw. Bremsung, ausgelöster Bremsruck) ist unter anderem abhängig von weiteren Faktoren:
- der aktuellen Geschwindigkeit des Fahrzeuges,
- dem Umfeld des Fahrzeuges, beispielsweise wie nahe sich andere Fahrzeuge befinden,
- dem ermitteltem Grad der Gefährlichkeit der Verkehrssituation durch das Fahrzeugsystem,
- dem Grad der Aufmerksamkeit bzw. Müdigkeit des Fahrers, sowie Zustande und emotionalem Befindens des Fahrers,
- der Art und Beschaffenheit der Straße, beispielsweise entsprechend den Navigationskarten von Navigationssystemen durch Differenzierung von Ortschaften, Landstraßen sowie Autobahnen sowie Differenzierung des Zustandes von Straßen nach angegebenen Kategorien in Navigationskarten,
- dem Zustand der Straße, auch in Abhängigkeit vom Wetter, also Regen, Schnee, Glätte, und Außentemperatur, und
- aktuellen Informationen über Verkehrsbeeinträchtigungen über Telematik-Services,

Weiterhin können diese Faktoren auch bei der automatischen Anpassung physikalischer Parameter bzw. Werte weiterer Fahrerassistenzsysteme, beispielsweise PreCrash-Systeme, Braking Guard, Lane-Departure-Warning, RSD/AWV berücksichtigt werden.

Eine Anpassung der eingestellten Geschwindigkeit sowie weiterer physikalischer Werte des Tempomaten sowie des ACC erfolgt durch das Fahrzeugsystem auch bei häufiger Blickabwendung (schneller Sequenz der Blickabwendung des Fahrers) sowie bei vom Fahrzeugsystem erfasster Unaufmerksamkeit oder Müdigkeit des Fahrers.

Weiterhin kann das ACC-Stop&Go, auch bekannt als Stadt-ACC, die automatische Weiterfahrt des Fährzeuges im Stau oder bei stehenden Fahrzeugen, beispielsweise an der Kreuzung, mit Unterstützung des ACC automatisch adaptiv abhängig von der Blickrichtung des Fahrers sein. Es kann also bei einer Blickabwendung die automatische Weiterfahrt unterdrückt werden.

Bei längerer bzw. häufigerer Blickabwendung oder Unaufmerksamkeit und Müdigkeit des Fahrers fährt das Fahrzeug nicht automatisch weiter bzw. verhält sich anders als bei Blickzuwendung auf die Straße und bei Aufmerksamkeit des Fahrers.

Ein Vorteil von einem automatisch adaptivem ACC und Tempomaten, sowie PreCrash-System und weiterer Fahrerassistenzsysteme, in Abhängigkeit von Blickrichtung sowie Aufmerksamkeit und Müdigkeit des Fahrers ist, dass unter anderem die vom Fahrer im Fahrzeugsystem eingestellte bzw. vom Fahrzeugsystem berechnete Geschwindigkeit und/oder Beschleunigung automatisch reduziert wird, die Verzögerung bzw. Bremsung verstärkt wird bzw. eingeleitet wird, ein Bremsruck früher eingeleitet bzw. verstärkt wird, die Zeitlücke bzw. der Sicherheitsabstand vom ACC automatisch vergrößert werden, und Warnschwellen adaptiv angepasst werden. Schwere Auffahrunfälle können so verhindert bzw. abgemildert werden sowie schwere Unfallfolgen reduziert werden.

Weiterhin können physikalische Parameter bzw. Werte einer PreCrash-Funktionalität in Abhängigkeit von der Blickrichtung, also der Blickabwendung, sowie gegebenenfalls Aufmerksamkeit und Müdigkeit des Fahrers automatisch adaptiv verändert werden. Beispiele dafür sind Warnzeiten des Fahrers, Art und Weise der Warnung des Fahrers, Stärke bzw. Zeitpunkt der Einleitung des Bremsruckes, Gurtstraffung, Fenster-, Schiebedach-, Sitz- und Kopfstütz- sowie Airbageinstellungen. Bei längerer bzw. häufigerer Blickabwendung und gegebenenfalls Unaufmerksamkeit und Müdigkeit des Fahrers wird das Fahrzeug unter Berücksichtigung seines Umfeldes auf einen möglichen Zusammenstoß mit anderen Fahrzeugen, Personen und/oder Objekten vorbereitet.

Eine automatische adaptive Parameteranpassung des Fahrerassistenzsystems kann grundsätzlich bei weiteren fahrtunterstützenden Fahrerassistenzsystemen im Fahrzeug in Abhängigkeit von Blickrichtung bzw. Blickabwendung und gegebenenfalls Aufmerksamkeit und Müdigkeit des Fahrers und dem allgemeinem Fahrerzustand bzw. Fahrerverhalten erfolgen. Den Fahrer während der Fahrt unterstützende oder assistierende Fahrerassistenzsysteme (wie Braking Guard, LDW/HC Lane-Departure-Warnung/Heading Control, RSD/AWV (AWV: Anhaltewegverkürzung durch beispielsweise Vorbereitung des Bremssystems durch Prefill und Prebrake)) können auch aufmerksamkeitsadaptiv und/oder blickabhängig vom Fahrer und/oder Fahrerzustands-abhängig sein.

Es kann eine Grundkomponente bzw. kombiniert mehrere Grundkomponenten (Grundmodule Hardware und Software) zur Blickrichtungserfassung bzw. Blickbewegungserfassung als Grundlagenkomponente realisiert sein und für Fahrerassistenzsysteme verwendet werden. Über eine oder mehrere definierte Schnittstellen werden für andere Fahrerassistenzsysteme wichtige physikalische Parameter oder Werte aus Blickrichtungserfassung bzw. Blickbewegungserfassung an Fahrt unterstützende FAS übergeben. Somit können die fahrtunterstützende FAS blickabhängig vom Fahrer und gegebenenfalls aufmerksamkeitsadaptiv und gegebenenfalls abhängig vom Fahrerzustand realisiert werden.

### Beispiel 1: Braking-Guard-Assistent

Wenn der Fahrer ohne zu Bremsen einem Hindernis gefährlich nahe kommt, berechnet der Braking-Guard-Assistent, der eine Teilfunktion der ACC ist, ob noch genug Zeit zum Lenken oder Ausweichen bleibt und lässt dem Fahrer eine entsprechend kurze Frist zum Reagieren. Wenn dieser nichts unternimmt, wird er zum Bremsen aufgefordert, indem ein Signalton ertönt und gleichzeitig rote Warnlichter aufleuchten. Sollte der Fahrer weiter passiv bleiben, löst der Braking-Guard-Assistent eine ruckartige Mini-Bremsung aus. Sie dauert beispielsweise nur 0,3 Sekunden und verlangsamt das Fahrzeug um fünf km/h. Der Fahrer spürt jedoch einen starken Impuls, der ihn wachrüttelt. Wenn er jetzt bremst, wird er vom Bremsassistenten sofort mit voller Bremsleistung unterstützt.

Bei den Berechnungsalgorithmen des Braking-Guard-Assistent werden die aktuelle Blickrichtung (bzw. Blickabwendung oder Blickverhalten) und/oder der Grad der Aufmerksamkeit und Müdigkeit des Fahrers berücksichtigt. Somit kann das Fahrerassistenzsystem Braking Guard auch aufmerksamkeitsadaptiv und blickabhängig vom Fahrer funktionieren.

### Beispiel 2: Lane-Departure- Warning

Beim Lane-Departure-Warning kann z.B. die Schwellenadaption der Warnung bzw. Art und Weise der Warnung automatisch adaptiv von Blickrichtungserfassung bzw. Blickbewegungserfassung und/oder Aufmerksamkeit und Müdigkeit des Fahrers erfolgen. Die Warnung kann unterdrückt bzw. reduziert und/oder später eingeleitet werden, wenn der Fahrer auf die Straße sieht und sein Blick nicht von der Straße abschweift und dieser aufmerksam ist und nicht müde. Die Warnung kann bei Blickabwendung von der Straße, Unaufmerksamkeit und/oder Müdigkeit verstärkt werden und automatische präventive Fahrzeugreaktionen können früher eingeleitet werden.

### Beispiel 3: Spurhalteassistenzsystem

Der Spurhaltesystemassistent, auch als "Lane Assist" geläufig, wird mit dem beschriebenen System für die Blickrichtungserfassung des Fahrers kombiniert. Dabei funktionieren bekannte Spurhaltesystem üblicherweise in nachstehend beschriebener Weise:
"Sollte der Fahrer die Hände ganz vom Lenkrad nehmen, bemerkt es das System, signalisiert akustisch und mit einem Hinweis in der Multifunktionsanzeige eine sog. Übernahmeaufforderung und schaltet dann ab."
"Der Spurhalteassistent reagiert zudem nicht, wenn der Fahrer vor dem Überfahren einer Markierung den Bunker setzt."

In Kombination mit einer Blickrichtungserfassung des Fahrers mit den oben erläuterten Merkmalen wird das Spurhaltesassistenzsystem um folgende Funktion erweitert:
Mit Hilfe der Blickrichtungserfassung des Fahrers erkennt das Fahrzeugsystem, wenn der Fahrer mit hoher Wahrscheinlichkeit bewusst die Fahrbahnmarkierung überfahren möchte, auch ohne zu Blinken, und greift in diesem Fall nicht in den Lenkvorgang des Fahrers ein.

Dies kann insbesondere bei Strecken von Vorteil sein, bei denen der Spurhalteassistent längere Zeit eine Fahrbahnmarkierung erkennt, die der Fahrer aber nicht einhalten kann und/oder möchte und damit diese häufiger überfahrt, z.B. eine zusätzliche Fahrbahnmarkierung in einem Baustellenabschnitt oder zu enge Spuren, die der Fahrer in einigen Situationen bewusst permanent nicht halten möchte und bewusst permanent die Fahrbahnmarkierung überfahrt.

Für den Fahrer wäre es in solchen Fällen nicht komfortabel sowie evtl. nicht praktikabel oder gar nicht möglich den Spurhalteassistenten häufiger während der Fahrt anzuschalten und wieder auszuschalten. Auf der anderen Seite ist ein häufiges Nachlenken des Spurhalteassistenten für den Fahrer eine weitere Belastung.

Weiterhin kann das Fahrzeugsystem über die Blickrichtungserfassung des Fahrers ermitteln, ob der Fahrer wichtige Informationen bzw. Warnungen des Spurhalteassistenten über Anzeigen im Kombi mit hoher Wahrscheinlichkeit wahrgenommen hat, indem die Blickfixierung des Fahrers auf das Kombinationsinstrument und/oder die dortigen Anzeigen bestimmt wird. So kann der Fahrer z.B. über mehrere Warnstufen gewarnt werden, wenn dieser mit hoher Wahrscheinlichkeit die Anzeigen, einschließlich Warnungen und Informationen, des Spurhalteassistenten nicht wahrgenommen hat, beispielsweise wenn der Spurhalteassistent dabei ist sich selbst zu deaktivieren und/oder der Fahrer seine Hände nicht am Lenkrad hat. Das Fahrzeugsystem gibt an den Fahrer wiederholt zunehmend stärker wahrnehmbare Warnungen, beispielsweise mittels mehr Lichteffekten, größeren und bunteren Bildern, mit stärker werdenden verschiedenartigen akustischen und/oder haptischen Signalen, etc., solange bis das Fahrzeugsystem erkennt, dass der Fahrer die Lenkung wieder selbst für einen sicheren Fahrzustand ausreichend übernommen hat.

Wenn das Blickrichtungserfassungssystem des Fahrers erkennt, dass der Fahrer seinen Blick über eine kritische Zeit hinaus nicht auf die Straße sowie die Fahrzeuganzeigen im Kombinationsinstrument oder auch anderen Anzeigen im Fahrzeug richtet, deaktiviert sich das Spurhalteassistenzsystem nicht sofort, insbesondere wenn der Fahrer die Hände nicht am Lenkrad hat, sondern das Fahrzeugsystem reduziert kontinuierlich in Abhängigkeit von der Umfeldsituation des Fahrzeuges seine Geschwindigkeit, solange bis das Fahrzeug in einen soweit wie möglich unkritischen Zustandgelangt bzw. mögliche Unfallfolgen im Falle eines in dieser Situation eintretenden Unfalls minimiert werden.

## Patentansprüche

1. Verfahren zum Adaptieren von einem oder mehreren Parametern eines den Fahrer eines Kraftfahrzeugs unterstützenden Fahrerassistenzsystems,
Erfassen einer aktuellen Blickrichtung des Fahrers durch eine Blickerfassungseinrichtung (1),
Bestimmen einer Zeitdauer, während welcher der Fahrer nicht auf die Straße schaut, aus der aktuellen Blickrichtung, und
Adaptierung des oder der Parameter des Fahrerassistenzsystems, wenn die ermittelte Zeitdauer einen vorgegebenen kritischen Zeitwert überschreitet,
**dadurch gekennzeichnet, dass**
aus der Erfassung der aktuellen Blickrichtung eine Frequenz bestimmt wird, mit welcher der Fahrer seinen Blick von der Straße abwendet und eine Adaption eines oder mehrerer Parameter des Fahrerassistenzsystems erfolgt, wenn die Frequenz größer als eine vorgegebene Schwelle ist.

2. Verfahren nach Anspruch 1, **dadurch gekennzeichnet, dass** der kritische Zeitwert eine Funktion weiterer Parameter ist.

3. Verfahren nach Anspruch 2, **dadurch gekennzeichnet, dass** die weiteren Parameter durch einen oder mehreren aktuellen Fahrzeugparametern und/oder durch einen oder mehreren aktuellen Umgebungsparameter des Kraftfahrzeugs gebildet werden.

4. Verfahren nach Anspruch 3, **dadurch gekennzeichnet, dass** die aktuelle Geschwindigkeit des Fahrzeugs, das Umfeld des Fahrzeugs, der Aufmerksamkeitsgrad des Fahrers, die Art und Beschaffenheit der Straße, der Zustand der Straße und aktuelle Informationen über Verkehrsbeeinträchtigungen zu den Fahrzeugparametern und Umgebungsparameter gehören.

5. Verfahren nach einem der vorangegangenen Ansprüche, **dadurch g kennz ichn t,** dass die adaptierbaren Parameter des Fahrerassistenzsystems durch die Fahrzeuggeschwindigkeit, die Fahrzeugbeschleunigung, die Fahrzeugverzögerung bzw. die Fahrzeugbremsung, der Zeitpunkt der Initiierung eines Bremsrucks zur Fahrerwarnung, der Sicherheitsabstand zu einem vorausfahrenden Fahrzeug und/oder Warnschwellen gebildet werden.

6. Vorrichtung zum Adaptieren von einem oder mehreren Parametern eines den Fahrer eines Kraftfahrzeugs unterstützenden Fahrerassistenzsystems, wobei die Vorrichtung zur Durchführung des Verfahrens nach einem der vorangegangenen Ansprüche eingerichtet und ausgelegt ist, aufweisend
eine Einheit (1) zur Erfassung der Blickrichtung des Fahrers,
eine Einheit (2) zur Bestimmung der Zeitdauer, während welcher der Fahrer seinen Blick von der Straße abwendet,
eine Vergleichereinheit (3) zum Vergleichen der ermittelten Zeitdauer mit einem vorbestimmten kritischen Zeitwert,
eine Einrichtung, die aus der Erfassung der aktuellen Blickrichtung eine Frequenz bestimmt mit welcher der Fahrer seinen Blick von der Straße abwendet, und
einer Signalerzeugungseinheit (6) zum Erzeugen eines Steuersignals (7), wenn die ermittelte Zeitdauer die kritische Zeit überschreitet und die Frequenz größer als eine vorgegebene Schwelle ist, wobei das Steuersignal (7) in einem Fahrerassistenzsystem die Adaption vorbestimmter Parameter bewirkt.

7. Vorrichtung nach Anspruch 6, **dadurch gekennzeichnet, dass** die Vorrichtung eine Einheit zur Erfassung des allgemeinen Fahrerzustands aufweist,

8. Vorrichtung nach einem der Ansprüche 6 oder 7, **dadurch gekennzeichnet, dass** die Vorrichtung eine Einheit (5) zur Adaptierung der kritischen Zeit an eine oder mehrere Fahrzeugparameter und/oder eine oder mehrere Parameter der Fahrzeugumgebung aufweist.

9. Spurhaltesystem eines Kraftfahrzeugs, wobei das Spurhaltesystem ein Moment auf die Lenkung des Kraftfahrzeugs ausübt, um das Fahrzeugs in einer Fahrspur zu halten, **dadurch gekennzeichnet, dass** das Spurhaltesystem eine Vorrichtung nach einem der Ansprüche 6 bis 8 aufweist, wobei die Blickerfassungseinrichtung neben der Bestimmung der ersten Zeitdauer, während der der Fahrer seinen Blick von der Straße abwendet, die Blickrichtung des Fahrers bestimmt und aus dem Steuersignal und der Blickrichtung erkennt, dass der Fahrer bewusst die Fahrbahnmarkierung überfahren will und in diesem Fall kein korrigierendes Lenkmoment aufbaut.

10. Spurhaltesystem nach Anspruch 9, **dadurch gekennzeichnet, dass** die Blickerfassungseinrichtung eine zweite Zeitdauer bestimmt, während welcher der Fahrer seinen Blick nicht auf die Fahrzeuganzeigen richtet, und das Spurhaltesystem die Geschwindigkeit des Fahrzeugs reduziert, wenn die der Fahrer seinen Blick über die kritische Zeit hinaus weder auf die Strasse noch auf die Fahrzeuganzeigen gerichtet hat.

## Claims

1. Method for adapting one or more parameters of a driver assistance system assisting the driver of a motor vehicle,
determining a current viewing direction of the driver by means of a gaze direction device (1),
determining a time period during which the driver is not looking at the road from the current viewing direction, and
adapting the parameter or parameters of the driver assistance system if the time period determined exceeds a predefined critical time value,
**characterized in that**
the detection of the current viewing direction is used to determine a frequency with which the driver takes his eyes off the road, and one or more parameters of the driver system are adapted when the frequency is greater than a predefined threshold.

2. Method according to Claim 1, **characterized in that** the critical time value is a function of further parameters.

3. Method according to Claim 2, **characterized in that** the further parameters are formed by one or more current vehicle parameters and/or by one or more current environmental parameters of the motor vehicle.

4. Method according to Claim 3, **characterized in that** the current speed of the vehicle, the surroundings of the vehicle, the level of attention of the driver, the type and nature of the road, the state of the road and current information about traffic impairments belong to the vehicle parameters and environmental parameters.

5. Method according to one of the preceding claims, **characterized in that** the adaptable parameters of the driver assistance system are formed by the vehicle speed, the vehicle acceleration, the vehicle deceleration or the vehicle braking, the time of initiation of a brake jerk for driver warning, the safety margin from a preceding vehicle and/or warning thresholds.

6. Device for adapting one or more parameters of a driver assistance system assisting the driver of a motor vehicle, wherein the device is set up and designed to perform the method according to one of the preceding claims, having
a unit (1) for detecting the viewing direction of the driver,
a unit (2) for determining the time period during which the driver takes his eyes off the road,
a comparator unit (3) for comparing the time period determined with a predetermined critical time value,
a device which uses the detection of the current viewing direction to determine a frequency with which the driver takes his eyes off the road, and
a signal generating unit (6) for generating a control signal (7) when the time period determined exceeds the critical time and the frequency is greater than a predefined threshold, wherein the control signal (7) effects the adaptation of predetermined parameters in a driver assistance system.

7. Device according to Claim 6, **characterized in that** the device has a unit for detecting the driver's general condition.

8. Device according to either of Claims 6 and 7, **characterized in that** the device has a unit (5) for adapting the critical time to one or more vehicle parameters and/or one or more parameters of the environment of the vehicle.

9. Lane-keeping system of a motor vehicle, wherein the lane-keeping system exerts a torque on the steering of the motor vehicle in order to keep the vehicle in a lane, **characterized in that** the lane-keeping system has a device according to one of Claims 6 to 8, wherein the gaze direction device, in addition to determining the first time period during which the driver takes his eyes off the road, determines the viewing direction of the driver and, from the control signal and the viewing direction, detects that the driver deliberately wishes to cross the lane marking and, in this case, does not build up a corrective steering torque.

10. Lane-keeping system according to Claim 9, **characterized in that** the gaze direction device determines a second time period, during which the driver does not look at the vehicle displays, and the lane-keeping system reduces the speed of the vehicle if the driver has not looked either at the road or at the vehicle displays beyond the critical time.

## Revendications

1. Procédé d'adaptation d'un ou de plusieurs paramètres d'un système d'assistance du conducteur aidant le conducteur d'un véhicule automobile ; détection d'une direction actuelle du regard du conducteur par le biais d'un dispositif de détection de regard (1) ;
détermination d'une durée pendant laquelle le conducteur ne regarde pas la route, à partir de la direction actuelle du regard ; et
adaptation du ou des paramètres du système d'assistance du conducteur lorsque la durée déterminé dépasse une valeur de temps critique prédéfinie ;
**caractérisé en ce que** :
une fréquence est déterminée à partir de la détection de la direction actuelle du regard à laquelle le conducteur détourne son regard de la route et qu'une adaptation d'un ou de plusieurs paramètres du système d'assistance du conducteur est réalisée lorsque la fréquence est supérieure à un seuil prédéfini.

2. Procédé selon la revendication 1, **caractérisé en ce que** la valeur de temps critique est fonction de paramètres supplémentaires.

3. Procédé selon la revendication 2, **caractérisé en ce que** les paramètres supplémentaires sont formés par un ou plusieurs paramètres de véhicule actuels et/ou par un ou plusieurs paramètres environnementaux actuels du véhicule automobile.

4. Procédé selon la revendication 3, **caractérisé en ce que** la vitesse actuelle du véhicule, l'environnement du véhicule, le degré d'attention du conducteur, le type de route et sa structure, l'état de la route et les informations actuelles relatives à l'état du trafic font partie des paramètres de véhicule et des paramètres environnementaux.

5. Procédé selon l'une quelconque des revendications précédentes, **caractérisé en ce que** les paramètres adaptables du système d'assistance du conducteur sont formés par la vitesse du véhicule, l'accélération du véhicule, le ralentissement de véhicule et/ou le freinage du véhicule, le moment auquel une pression du frein est envoyée comme avertissement du conducteur, la distance de sécurité avec un véhicule placé devant et/ou des seuils d'avertissement.

6. Dispositif d'adaptation d'un ou de plusieurs paramètres d'un système d'assistance du conducteur aidant le conducteur d'un véhicule automobile, le dispositif étant conçu et agencé pour mettre en œuvre le procédé selon l'une quelconque des revendications précédentes, comportant :
une unité (1) de détection de la direction du regard du conducteur ;
une unité (2) de détermination de la durée pendant laquelle le conducteur détourne son regard de la route ;
une unité de comparaison (3) pour comparer la durée déterminée à une valeur de temps critique prédéfinie ;
un dispositif déterminant, à partir de la détection de la direction actuelle du regard, une fréquence à laquelle le conducteur détourne son regard de la route et une unité d'émission de signaux (6) pour émettre un signal de commande (7) lorsque la durée déterminée dépasse la durée critique et le signal de commande (7) provoquant l'adaptation de paramètres prédéfinis dans un système d'assistance du conducteur lorsque la fréquence est supérieure à un seuil prédéterminé.

7. Dispositif selon la revendication 6, **caractérisé en ce que** le dispositif comporte une unité de détection de l'état général du conducteur.

8. Dispositif selon l'une quelconque des revendications 6 ou 7, **caractérisé en ce que** le dispositif comporte une unité (5) d'adaptation de la durée critique à un ou plusieurs paramètres du véhicule et/ou à un ou plusieurs paramètres de l'environnement du véhicule.

9. Système de maintien de trajectoire d'un véhicule automobile, le système de maintien de trajectoire exerçant un couple sur la direction du véhicule automobile pour maintenir le véhicule sur la voie de circulation, **caractérisé en ce que** le système de maintien de trajectoire comporte un dispositif selon l'une quelconque des revendications 6 à 8, le dispositif de détection de regard déterminant, outre la détermination de la première durée pendant laquelle le conducteur détourne son regard de la route, la direction du regard du conducteur et identifiant, à partir du signal de commande et de la direction du regard, que le conducteur veut consciemment traverser le marquage de la voie de circulation et n'applique dans ce cas aucun couple correctif de direction.

10. Système de maintien de trajectoire selon la revendication 9, **caractérisé en ce que** le dispositif de détection de regard définit une deuxième durée pendant laquelle le conducteur n'oriente pas son regard sur l'affichage du véhicule et le système de maintien de trajectoire réduit la vitesse du véhicule lorsque le conducteur n'oriente son regard, au-delà de cette durée critique, ni sur la route ni sur l'affichage du véhicule.
